(19) **Europäisches Patentamt / European Patent Office / Office européen des brevets**

(11) **EP 4 270 543 A1**

(12) **EUROPEAN PATENT APPLICATION**
published in accordance with Art. 153(4) EPC

(43) Date of publication:
**01.11.2023 Bulletin 2023/44**

(21) Application number: **21910635.8**

(22) Date of filing: **17.12.2021**

(51) International Patent Classification (IPC):
$H01M\ 4/40^{(2006.01)}$  $H01M\ 10/052^{(2010.01)}$
$H01M\ 10/0567^{(2010.01)}$  $H01M\ 10/0569^{(2010.01)}$

(52) Cooperative Patent Classification (CPC):
**H01M 4/40; H01M 10/052; H01M 10/0567;**
**H01M 10/0569;** Y02E 60/10

(86) International application number:
**PCT/JP2021/046734**

(87) International publication number:
**WO 2022/138490 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2020 JP 2020216475**

(71) Applicant: **Panasonic Intellectual Property Management Co., Ltd.**
**Kadoma-shi, Osaka 571-0057 (JP)**

(72) Inventors:
• **UCHIYAMA, Yohei**
  **Kadoma-shi, Osaka 571-0057 (JP)**
• **ISHII, Kiyohiro**
  **Kadoma-shi, Osaka 571-0057 (JP)**

(74) Representative: **Novagraaf International SA**
**Chemin de l'Echo 3**
**1213 Onex, Geneva (CH)**

(54) **LITHIUM SECONDARY BATTERY**

(57)  A lithium secondary battery includes a positive electrode, a negative electrode, a separator disposed between the positive electrode and the negative electrode, and a non-aqueous electrolyte. The negative electrode includes a lithium alloy containing magnesium. At the negative electrode, a lithium metal deposits during charge, and the lithium metal dissolves during discharge. The non-aqueous electrolyte contains a hydrofluoroether and lithium ions.

*FIG. 1*

EP 4 270 543 A1

**Description**

[Technical Field]

The present disclosure relates to a lithium secondary battery.

[Background Art]

A lithium secondary battery (also called a lithium metal secondary battery) using lithium metal as a negative electrode active material has a high theoretical capacity density. In a lithium secondary battery, a lithium metal deposits on the negative electrode current collector in the process of charging, and the deposited lithium metal dissolves in the non-aqueous electrolyte in the process of discharging. In a lithium secondary battery, a negative electrode including a lithium alloy is used in some cases.

Patent Literature 1 proposes a metal electrode including a host metal structure that forms an alloy by being alloyed with an alkali or alkaline earth metal, wherein the alloyed host metal structure is disposed in contact with an electrolyte, under the condition where all the parts of the alloy remain in full electronic contact. The electrode is without: electrical insulation by encapsulation, an electronic non-conductive film formed on the surface of the alloy, and electrical insulation of a certain part of the alloy after complete impregnation of electrolyte into the alloyed area. Patent Literature 1 discloses that the host metal is selected from the group consisting of aluminum, magnesium, silicon, zinc, boron, mercury, gold, and alloys thereof.

Patent Literature 2 proposes a lithium secondary battery including a positive electrode, a negative electrode, and a non-aqueous electrolyte having lithium ion conductivity. At the negative electrode, a lithium metal deposits during charge, and the lithium metal leaches out into the non-aqueous electrolyte during discharge. The non-aqueous electrolyte contains a lithium salt and a solvent, in which the solvent contains a fluorinated ether, and the fluorinated ether has a fluorination rate of exceeding 0% and 60% or less.

[Citation List]

[Patent Literature]

Patent Literature 1: Japanese Laid-Open Patent Publication No. S61 (1986)-8849 (claims 77 and 80)
Patent Literature 2: Japanese Laid-Open Patent Publication No. 2019-216094

[Summary of Invention]

[Technical Problem]

In the lithium secondary battery, during charge, ions contained in the non-aqueous electrolyte receive electrons at the negative electrode during charge, and thus, a lithium metal deposits. The deposited lithium metal dissolves in the non-aqueous electrolyte during discharge. Charge and discharge proceed through such deposition and dissolution of lithium metal. The lithium metal has extremely high reductivity and readily causes a side reaction with the non-aqueous electrolyte. In the lithium secondary battery, except when it is in a fully discharged state, the lithium metal is almost usually present on the negative electrode. Therefore, in the lithium secondary battery, as compared to in other batteries like lithium ion batteries, the chances are high of the lithium metal and the non-aqueous electrolyte to come in contact with each other, and a side reaction between the two readily occurs. In addition, in the lithium secondary battery, the lithium metal tends to deposit in the form of dendrites. When the lithium metal deposits in the form of dendrites, the specific surface area of the negative electrode increases, and the side reaction between the lithium metal and the non-aqueous electrolyte increases. Therefore, in the lithium secondary battery, the deterioration in cycle characteristics associated with reduction in discharge capacity is remarkable.

[Solution to Problem]

In view of the above, one aspect of the present disclosure relates to a lithium secondary battery, including:

a positive electrode; a negative electrode; a separator disposed between the positive electrode and the negative electrode; and a non-aqueous electrolyte, wherein

the negative electrode, at least in a charged state, includes a lithium alloy containing magnesium,
at the negative electrode, a lithium metal deposits during charge, and the lithium metal dissolves during discharge, and
the non-aqueous electrolyte contains a hydrofluoroether and lithium ions.

[Advantageous Effects of Invention]

The cycle characteristics of a lithium secondary battery can be improved.

[Brief Description of Drawing]

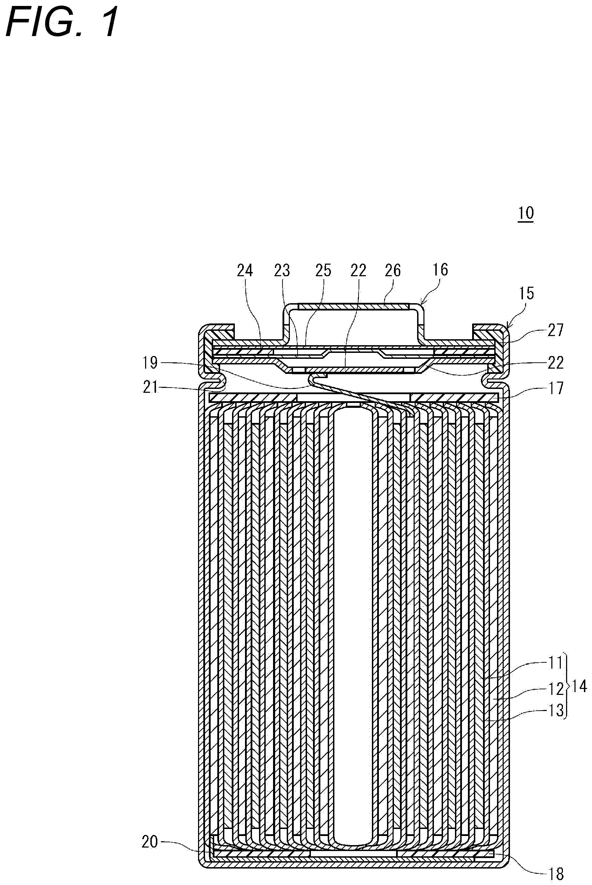

[FIG. 1] A schematical longitudinal cross-sectional view of a lithium secondary battery according to one embodiment of the present disclosure.

[Description of Embodiments]

While the novel features of the invention are set forth particularly in the appended claims, the invention, both as to organization and content, will be better understood and appreciated, along with other objects and features thereof, from the following detailed description taken in conjunction with the drawings.

Typically, in a lithium metal secondary battery, during charge, through at least one of decomposition and reaction of components contained in the electrolyte, a surface film is formed at the negative electrode. The surface film is called an SEI (Solid Electrolyte Interphase) film. The SEI film will also be formed on the surface of the deposited lithium metal. During charge, at the negative electrode, the SEI film will be formed under the deposition of lithium metal, and therefore, the thickness of the SEI film tends to be nonuniform. Consequently, as compared to in other batteries like lithium ion batteries, the charge reaction tends to proceed unevenly, which may cause a reduction of capacity, leading to a deterioration in cycle characteristics. When the charge reaction occurs locally, the lithium metal tends to deposit in the form of dendrites, and due to its increased specific surface area, the side reaction between the lithium metal and the electrolyte is further increased. As a result, the reduction in discharge capacity becomes significant, and the cycle characteristics deteriorate considerably.

In view of the above, a lithium secondary battery according to the present disclosure includes a positive electrode, a negative electrode, a separator disposed between the positive electrode and the negative electrode, and a non-aqueous electrolyte. The negative electrode, at least in a charged state, includes a lithium alloy containing magnesium. At the negative electrode, a lithium metal deposits during charge, and the lithium metal dissolves during discharge. The non-aqueous electrolyte contains a hydrofluoroether and lithium ions.

With the configuration as above, in the lithium secondary battery of the present disclosure, the cycle characteristics can be improved. The improvement in cycle characteristics can be achieved presumably for the following reasons. When the above negative electrode is combined with the above non-aqueous electrolyte, it is presumed that the hydrofluoroether reacts with the magnesium in the negative electrode, to form a stable magnesium fluoride on the surface of the negative electrode. In other words, it is presumed that an SEI film containing magnesium fluoride and having excellent film quality is formed on the surface of the negative electrode. Therefore, on the surface of the negative electrode, the deterioration of the lithium due to oxidation is considered to be reduced. Moreover, since the negative electrode includes a lithium alloy containing magnesium, local deposition of lithium metal during charge is reduced. In addition, the formation of an SEI film containing magnesium fluoride can make the negative electrode surface smoother. Therefore, the dendritic deposition of lithium metal is reduced, and the increase in the specific surface area of the negative electrode is suppressed. The suppressed increase in the specific surface area of the negative electrode, together with the formation of an SEI coating with excellent film quality on the negative electrode surface, can contribute to reduce the side reaction between the lithium metal and components contained in the non-aqueous electrolyte, leading to a suppressed reduction in discharge capacity. Presumably as a result, the cycle characteristics are improved. Furthermore, the suppressed dendritic deposition of lithium metal leads to a decreased film thickness of the negative electrode. By this, the density of the negative electrode active material in the negative electrode is increased, and thus, the energy density can be improved.

In the lithium secondary battery of the present disclosure, more excellent cycle characteristics can be achieved than expected from when a negative electrode including a lithium alloy containing magnesium is used and when a non-aqueous electrolyte containing a hydrofluoroether is used. This is presumably because the negative electrode including a lithium alloy containing magnesium and the non-aqueous electrolyte containing hydrofluoroether interact with each other, to form an SEI film with excellent film quality, which synergistically improves the cycle characteristics.

In the present specification, the hydrofluoroether means an ether compound having a hydrogen atom and a fluorine atom.

In the following, the configuration of the lithium secondary battery of the present disclosure will be more specifically described.

(Negative electrode)

The negative electrode, at least in a charged state, includes a lithium alloy containing magnesium. At the negative electrode, lithium ions form a lithium metal during charge, and the lithium metal dissolves to release lithium ions during discharge, through which capacity can be obtained. Also, at the negative electrode, part of lithium ions are absorbed (inserted) into the negative electrode (specifically, magnesium or a lithium alloy containing magnesium) to form a lithium alloy during charge, and lithium ions are released from the lithium alloy during discharge, through which, too, capacity can be obtained. In this way, lithium that constitutes the lithium alloy can function as a negative electrode active material. In the lithium secondary battery in an initial state or a fully discharged state, the negative electrode may not contain lithium.

The content of magnesium in the lithium alloy contained in the negative electrode is, for example, 0.1 mass% or more, preferably 0.5 mass% or more, or 1 mass% or more, and may be 3 mass% or more, or 5 mass% or more. When the content of magnesium in the lithium alloy is within the range as above, the effect of suppressing the dendritic deposition of lithium metal is further enhanced, and an SEI film having excellent film quality is more likely to be formed on the surface of the negative electrode. Thus, the cycle characteristics can be further improved. The content of magnesium in the lithium alloy is, for example, 30 mass% or less, and may be 15 mass% or less, or 10 mass% or less. When the content of magnesium in the lithium alloy is within the range as above, the percentage of the capacity obtained through deposition and dissolution of lithium metal increases, and a higher capacity can be achieved. Moreover, magnesium is readily solid-dissolved in lithium, tending to form a stable lithium alloy. These lower and upper limits can be combined in any combination.

The aforementioned content of magnesium in the lithium alloy is a value obtained for the negative electrode taken out from a lithium secondary battery in a fully discharged state in the initial stage. The lithium secondary battery in the initial stage refers to a lithium secondary battery having been subjected to preliminary charge and discharge after fabrication of the battery, and then subjected to 5 or less cycles (preferably 2 or less cycles) of charge and discharge. The lithium secondary battery in a fully discharged state is a battery discharged to a state of charge (SOC: State Of Charge) of 0.1C or less, where C is the rated capacity of the battery. The lithium secondary battery in a fully discharged state may be, for example, a battery that has been discharged at a constant current of 0.1C to a lower limit voltage. The lithium secondary battery in a fully discharged state in the initial stage is, for example, a lithium secondary battery obtained by subjecting a battery commercially available in a charged state to an initial discharge until the SOC drops to 0.1C or less.

The content of magnesium in the lithium alloy can be determined by the following procedure. First, the negative electrode is taken out from a lithium secondary battery in a fully discharged state in the initial stage. The taken-out negative electrode is immersed in 1,2-dimethoxyethane, to remove the lithium salt adhering to the surface of the negative electrode. The negative electrode taken out from the 1,2-dimethoxyethane is dried, to measure a mass $M_0$. Next, the dry negative electrode is immersed in pure water, to completely dissolve the lithium alloy contained in the negative electrode, thereby obtaining an aqueous solution. The concentration of magnesium ions in the aqueous solution is measured by inductively coupled plasma atomic emission spectroscopy (ICP-AES). Also, the remaining part after removing the lithium metal and lithium alloy from the negative electrode (specifically, the negative electrode current collector and, if necessary, a later-described negative electrode material other than lithium and lithium alloys) is taken out from the aqueous solution and dried. A mass $M_1$ of the obtained dry matter is measured. Then, from the mass of the lithium alloy obtained by subtracting the mass $M_1$ from the mass $M_0$, and the concentration of magnesium ions in the aqueous solution, the content of magnesium in the lithium alloy is calculated.

The lithium alloy may contain a third element other than lithium (first element) and magnesium (second element). Examples of the third element include aluminum, indium, calcium, lead, hydrogen, sodium, bismuth, copper, and zinc. The lithium alloy may contain one kind or two or more kinds of the third elements. The content of the third element in the lithium alloy is, for example, 10 mass% or less, and may be 1 mass% or less, or less than 0.1 mass%. The content of the third element in the lithium alloy can be determined in a similar manner to determining the content of magnesium.

The negative electrode may include, as needed, a negative electrode material other than lithium alloys and lithium metal. Examples of such a negative electrode material include a Si-containing material (e.g., silicon, silicon oxide), a Sn-containing material (e.g., tin, tin oxide), and a carbonaceous material (e.g., graphite, soft carbon, hard carbon, amorphous carbon). These negative electrode materials are capable of reversibly absorbing and releasing lithium. The negative electrode may contain one kind or two or more kinds of these negative electrode materials. The negative electrode may include a layer containing such a negative electrode material. The proportion of these negative electrode materials in the total amount of components constituting the negative electrode other than the negative electrode current collector is determined within a range in which capacity can be obtained through deposition and dissolution of lithium metal. The layer containing a negative electrode material may further contain, as needed, at least one selected from the group consisting of a binder, a conductive material, a thickener, and an additive. These components may be selected from those described for the positive electrode as described later.

The negative electrode usually includes a negative electrode current collector. For example, the negative electrode includes a negative electrode current collector and a lithium alloy formed on a surface of the negative electrode current collector.

The negative electrode current collector is an electrically conductive sheet. The conductive sheet may be foil, film, and the like. The material of the negative electrode current collector may be, for example, a metal material, such as a metal and an alloy. The negative electrode current collector is preferably a material that does not react with lithium. Examples of the metal material include copper (Cu), nickel (Ni), iron (Fe), and an alloy of one or more of these metal elements. Examples of the alloy include a copper alloy and stainless steel (SUS). In particular, preferred are copper and a copper alloy that have high electrical conductivity.

The thickness of the negative electrode current collector is, for example, 5 $\mu$m or more and 300 $\mu$m or less.

In the lithium secondary battery, for example, 70% or more of the rated capacity is developed through deposition and dissolution of lithium metal. The migration of electrons at the negative electrode during charge and during discharge is mainly due to the deposition and dissolution of lithium metal at the negative electrode. Specifically, 70 to 100% (e.g., 80 to 100%, 90 to 100%) of the migration of electrons (in other words, current flow) at the negative electrode during charge and during discharge is due to the deposition and dissolution of lithium metal. That is, the negative electrode in the lithium secondary battery differs from a negative electrode at which the migration of electrons at the negative electrode during charge and during discharge is mainly due to the absorption and release of lithium ions into and from the negative electrode active material (e.g., graphite).

In a battery like a lithium secondary battery in which a lithium metal deposits at the negative electrode during charge, the open circuit voltage (OCV) of the negative electrode at full charge is, for example, 70 mV or less versus lithium metal (lithium dissolution/deposition potential). The OCV of the negative electrode at full charge can be measured by disassembling a battery in an argon atmosphere, to take out the negative electrode, and assembling a cell using lithium metal as a counter electrode. The non-aqueous electrolyte of the cell may be of the same composition as that in the disassembled battery.

Here, the lithium secondary battery at full charge refers to a battery having been charged to an SOC of, for example, 0.98C or more, where C is the rated capacity of the battery.

The negative electrode can be obtained by, for example, forming a layer of a lithium alloy containing magnesium on a surface of a negative electrode current collector. For example, the negative electrode may be formed by press-fitting a foil of a lithium alloy containing magnesium onto a surface of a metal foil serving as a negative electrode current collector. When the negative electrode includes the above layer containing a negative electrode material, the layer containing a negative electrode material is formed by depositing a negative electrode material on a surface of the negative electrode current collector using a gas phase method, such as electrodeposition or vapor deposition. Alternatively, the layer containing a negative electrode material is formed by applying a negative electrode slurry containing constituent components of the layer (e.g., negative electrode material, binder, conductive material, thickener, and additive) and a dispersion medium, ono a surface of the negative electrode current collector, followed by drying and compressing the applied film. As the dispersion medium, at least one selected from the group consisting of water and an organic medium can be used.

(Non-aqueous electrolyte)

The non-aqueous electrolyte contains a hydrofluoroether and lithium ions. The non-aqueous electrolyte has lithium ion conductivity. The hydrofluoroether corresponds to a non-aqueous solvent. The non-aqueous electrolyte includes, for example, a non-aqueous solvent, and lithium ions and anions dissolved in the non-aqueous solvent. The non-aqueous electrolyte may be in the form of liquid or gel.

The non-aqueous electrolyte in the form of liquid is prepared by dissolving a lithium salt in a non-aqueous solvent. When the lithium salt is dissolved in the non-aqueous solvent, lithium ions and anions are produced. As the lithium salt, a salt of lithium ions and anions is used.

The non-aqueous electrolyte in the form of gel includes, for example, a liquid non-aqueous electrolyte and a matrix polymer. The matrix polymer is, for example, a polymer material to be gelled by absorbing a non-aqueous solvent. As the polymer material, at least one selected from the group consisting of a fluorocarbon resin, an acrylic resin, and a polyether resin can be used.

The non-aqueous solvent contains at least a hydrofluoroether (first solvent). The non-aqueous solvent may contain a non-aqueous solvent (second solvent) other than the hydrofluoroether. The hydrofluoroether may be a chain compound or a cyclic compound. The hydrofluoroether may be a compound that has an organic group having an ether bond (-O-) and a fluorine atom and that contains a hydrogen atom.

The hydrofluoroether may be, for example, a compound represented by the following formula (1).

$$R^1\text{-}(O\text{-}R^3)_m\text{-}O\text{-}R^2 \qquad (1)$$

(In the formula, at least one selected from the group consisting of $R^1$, $R^2$, and $R^3$ has at least one hydrogen atom, at least one selected from the group consisting of $R^1$, $R^2$, and $R^3$ has at least one fluorine atom, and m is an integer of 0 or more).

$R^1$ may be a hydrocarbon group, and may be an organic group containing a heteroatom. $R^2$ also may be a hydrocarbon group, and may be an organic group containing a heteroatom. Examples of the hydrocarbon group include an aliphatic hydrocarbon group like an alkyl group, an alicyclic hydrocarbon group, and an aromatic hydrocarbon group. Examples of the heteroatom contained in the organic group include oxygen, sulfur, nitrogen and silicon atoms. The organic group may be an aliphatic organic group containing a heteroatom, or a heterocyclic group containing a heteroatom as a ring-constituting atom.

$R^3$ may be a hydrocarbon group, and may be an alkylene group. The number of carbon atoms in the alkylene group is, for example, 1 or more and 4 or less, 2 or more and 4 or less, or 2 or more and 3 or less.

The value of m may be an integer of 0 or more and 6 or less, and may be an integer of 0 or more and 3 or less, in view of excellent ion conductivity.

The hydrofluoroether has a fluorine atom as a first substituent. At least one selected from the group consisting of $R^1$, $R^2$ and $R^3$ may have a substituent other than the fluorine atom. Hereinafter, the substituent other than the fluorine atom is sometimes referred to as a "second substituent". Examples of the second substituent include a halogen atom other than the fluorine atom (e.g., chlorine, bromine, or iodine atom), a hydrocarbon group, and a heteroatom-containing group (e.g., hydroxy or mercapto group). The hydrofluoroether may have one second substituent, and may have or two or more second substituents. When the hydrofluoroether has two or more second substituents, at least two of the second substituents may be the same, and all of the second substituents may be different.

In view of ensuring more excellent cycle characteristics, among the compounds represented by the formula (1), the hydrofluoroether preferably includes a compound represented by the following formula (1a).

$$R^1\text{-}O\text{-}R^2 \qquad (1a)$$

(In the formula, $R^1$ is a fluoroalkyl group, $R^2$ is an alkyl group or a fluoroalkyl group, and at least one of $R^1$ and $R^2$ has at least one hydrogen atom.)

The number of carbon atoms in the alkyl group represented by $R^2$ is, for example, 1 to 10, and is preferably 1 to 8, or 1 to 6. Examples of the alkyl group include methyl, ethyl, n-propyl, isopropyl, n-butyl, sec-butyl, tert-butyl, pentyl, hexyl, heptyl, and decyl groups.

The fluoroalkyl groups represented by $R^1$ and $R^2$ are, for example, a fluoroalkyl group corresponding to the alkyl group described for $R^2$. The fluoroalkyl group may have at least one fluorine atom. Here, $R^1$ and $R^2$ may each independently have a second substituent, as described above.

In view of achieving more excellent cycle characteristics, the total number n of carbon atoms in $R^1$ and $R^2$ is preferably 10 or less, may be 8 or less, or 6 or less, and may be 5 or less. The total number n of carbon atoms is, for example, 2 or more, and may be 3 or more, or 4 or more. These upper and lower limits can be combined in any combination.

Furthermore, in view of facilitating the formation of an SEI film having excellent film quality and achieving more excellent cycle characteristics, $R^1$ and $R^2$ preferably each independently have at least one hydrogen atom.

In view of ensuring more excellent cycle characteristics, the proportion of the compound represented by the formula (1a) in the whole hydrofluoroether is, for example, 70 mass% more, and may be 80 mass% or more, or 90 mass% or more. The proportion of the compound represented by the formula (1a) in the whole hydrofluoroether is 100 mass% or less. The hydrofluoroether may be constituted only of the compound represented by the formula (1a).

In view of achieving more excellent cycle characteristics, the fluorination rate of the hydrofluoroether is preferably 60% or more, more preferably 65% or more. The fluorination rate of the hydrofluoroether is, for example, 95% or less, and may be 90% or less, or 80% or less. These lower and upper limits can be combined in any combination.

In the present specification, the fluorination rate of the hydrofluoroether is defined by the following equation.

$$(\text{Fluorination rate}) = (\text{The number of fluorine atoms in one hydrofluoroether}) / (\text{The sum of the number of fluorine atoms and the number of hydrogen atoms in the one hydrofluoroether}) \times 100\ (\%)$$

Specific examples of the hydrofluoroether include 1, 1,2,2-tetrafluoroethyl-2,2,2-trifluoroethyl ether, and 1,1,2,2-tetrafluoroethyl-2,2,3,3-tetrafluoropropyl ether. However, the hydrofluoroether is not limited to these specific examples.

The non-aqueous electrolyte may contain one kind of hydrofluoroether, or two or more kinds thereof in combination, as a non-aqueous solvent.

Examples of the second solvent include esters, ethers (excluding hydrofluoroethers), nitriles, amides, and halogen-substituted products thereof. The non-aqueous electrolyte may contain one kind of the second solvent, or two more kinds thereof in combination. The halogen-substituted products include, for example, a fluoride.

The esters include, for example, a carbonic acid ester, and a carboxylic acid ester. Examples of a cyclic carbonic acid ester include ethylene carbonate, propylene carbonate, and fluoroethylene carbonate. Examples of a chain carbonic acid ester include dimethyl carbonate, ethyl methyl carbonate, and diethyl carbonate. Examples of a cyclic carboxylic acid ester include γ-butyrolactone and γ-valerolactone. Examples of a chain carboxylic acid ester include ethyl acetate, methyl propionate, and methyl fluoropropionate.

The ethers include, for example, a cyclic ether, and a chain ether. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether. The ether may be a perfluoroether, but a fluorine-free ether is preferred.

The nitriles include, for example, acetonitrile, propionitrile, and benzonitrile. The amides include, for example, dimethylformamide and dimethylacetamide.

When the non-aqueous electrolyte contains a second solvent, it is preferable to use at least an ether (e.g., fluorine-free ether) as the second solvent. Ethers are excellent in reduction resistance at the negative electrode and are less likely to cause a side reaction with lithium metal.

The content of the hydrofluoroether in the non-aqueous solvent is, for example, 30 vol% more, preferably 40 vol% or more, or 50 vol% or more. When the content of the hydrofluoroether is within the range as above, more excellent cycle characteristics can be achieved. The content of the hydrofluoroether in the non-aqueous solvent is 100 vol% or less, and may be 80 vol% or less, or 70 vol% or less. These lower and upper limits can be combined in any combination.

The sum of the contents of the hydrofluoroether and the ether serving as the second solvent in the non-aqueous solvent is preferably 50 vol% or more, preferably 75 vol% or more, or 90 vol% or more. The sum of the contents of the hydrofluoroether and the ether serving as the second solvent in the non-aqueous solvent is 100 vol% or less. The non-aqueous solvent may be constituted only of a hydrofluoroether and an ether serving as the second solvent.

The non-aqueous electrolyte may further contain a fluorinated alcohol. When the non-aqueous electrolyte contains a fluorinated alcohol, the improvement in cycle characteristics can be further enhanced. Although the detailed reason why enhanced improvement in cycle characteristics can be achieved is not clear, this is presumably for the following reason.

In a lithium metal secondary battery, bumpy deposits can be formed on the negative electrode during charge. With the bumpy deposits (hereinafter sometimes referred to as dendrite precursors) as their cores, deposits in the form of dendrites of lithium metal grow. In the lithium secondary battery of the present disclosure, the cycle characteristics improve even when the content of the fluorinated alcohol in the non-aqueous electrolyte is very small. From this, it can be seen that the SEI film formed on the negative electrode surface contains a component derived from the fluorinated alcohol. More specifically, it can be seen that when an SEI film containing magnesium fluoride is formed on the surface of the negative electrode, an organic fluoride component derived from the fluorinated alcohol is introduced into the SEI film. The formed SEI film is considered to have a strength by the inorganic component such as the magnesium fluoride, and a flexibility by the organic fluoride component. The organic fluoride component readily follows changes in the surface contour of the negative electrode during the dissolution of the lithium metal. This allows for the lithium metal to continue to be in contact with the SEI film, by which the formation of dendrite precursors is considered to be suppressed. Presumably as a result, the dendritic deposition of lithium metal is further reduced, and the cycle characteristics are further enhanced.

The fluorinated alcohol may be any alcohol having a fluorine atom. As the fluorinated alcohol, a compound represented by the following formula (2) is preferred.

R-OH            (2)

(In the formula, R is a fluoroalkyl group.)

The fluoroalkyl group represented by R may be a perfluoroalkyl group having no hydrogen atom, and may be a fluoroalkyl group having a hydrogen atom. In view of forming an SEI film containing an organic fluoride, R is preferably a fluoroalkyl group having a hydrogen atom.

The fluoroalkyl group has, for example, 1 to 10 carbon atoms, and preferably has 1 to 6, or 2 to 4 carbon atoms. The number of fluorine atoms in the fluoroalkyl group (or fluorinated alcohol) is, for example, 1 to 10, may be 1 to 8, or 1 to 6, and may be 2 to 6, or 3 to 6. Specific examples of the fluoroalkyl group include a difluoromethyl group, 2,2,2-trifluoroethyl group, 1,2,2-trifluoroethyl group, 1,1,2,2-tetrafluoroethyl group, 3,3,3-trifluoropropyl group, 2,2,3,3-tetrafluoropropyl group, and 2,2,3,3,3-pentafluoropropyl group. The fluoroalkyl group, however, is not limited to these specific examples.

The non-aqueous electrolyte may contain one kind of fluorinated alcohol, or two or more kinds thereof in combination.

In view of forming an SEI film containing an organic fluoride on the surface of the negative electrode, the fluorinated alcohol preferably includes at least one of 2,2,2-trifluoroethanol ($CF_3CH_2OH$), 2,2,3,3,3-pentafluoro-1-propanol ($CF_3CF_2CH_2OH$), and 2,2,3,3-tetrafluoro-1-propanol ($CHF_2CF_2CH_2OH$).

The content of the fluorinated alcohol in the non-aqueous electrolyte is, on a mass basis, for example, 5 ppm or more with respect to the total amount of the non-aqueous electrolyte. In view of readily causing an interaction with the SEI film containing magnesium fluoride, the mass-based content of the fluorinated alcohol may be 10 ppm or more, and may be 50 ppm or more, or 100 ppm or more. The mass-based content of the fluorinated alcohol in the non-aqueous electrolyte is, for example, 1500 ppm or less, may be 1000 ppm or less, may be 500 ppm or less, and may be 250 ppm or less. When the content of the fluorinated alcohol is within the range as above, the formation and growth of dendrite precursors and deposits in the form of dendrites can be remarkably suppressed. These lower and upper limits can be combined in any combination.

Note that, however, in the lithium secondary battery, the fluorinated alcohol is consumed for forming an SEI film, and therefore, when analyzing the non-aqueous electrolyte collected from the battery, the content of the fluorinated alcohol can be less than 5 ppm. On the other hand, it is rare that the fluorinated alcohol is completely consumed. In view of obtaining an effect of using a non-aqueous electrolyte containing a fluorinated alcohol, it suffices when the non-aqueous electrolyte collected from within the battery contains the fluorinated alcohol in an amount above the detection limit.

As the lithium salt or anions, any known component utilized for non-aqueous electrolyte in a lithium secondary battery can be used. Examples of the anions include $BF_4^-$, $ClO_4^-$, $PF_6^-$, $CF_3SO_3^-$, $CF_3CO_2^-$, anions of an imide compound, and anions of an oxalate compound. The anions of an imide compound may be $N(SO_2C_mF_{2m+1})(SO_2C_nF_{2n+1})^-$, where m and n is each independently an integer of 0 or more. The m and n each independently may be 0 to 3, and may be 0, 1 or 2. Examples of the anions of an imide compound include $N(SO_2CF_3)_2^-$, $N(SO_2C_2F_5)_2^-$, and $N(SO_2F)_2^-$. The anions of an oxalate compound may contain boron and/or phosphorus. The anions of an oxalate compound may be anions of an oxalate complex. Examples of the anions of an oxalate compound include bisoxalate borate anion, $BF_2(C_2O_4)^-$, $PF_4(C_2O_4)^-$, and $PF_2(C_2O_4)_2^-$. The non-aqueous electrolyte may contain one kind or two or more kinds of these anions.

The concentration of the lithium salt in the non-aqueous electrolyte is, for example, 0.5 mol/L or more and 3.5 mol/L or less. Here, the concentration of the lithium salt is the sum of the concentrations of the dissociated lithium salt and the undissociated lithium salt. The concentration of the anions in the non-aqueous electrolyte may be set to 0.5 mol/L or more and 3.5 mol/L or less.

The non-aqueous electrolyte may contain an additive. Examples of the additive include vinylene carbonate, fluoroethylene carbonate, and vinylethylene carbonate. The additive may be used singly or in combination of two or more kinds.

(Positive electrode)

The positive electrode includes, for example, a positive electrode current collector, and a positive electrode mixture layer formed on a surface of the positive electrode current collector. The positive electrode current collector may be sheet-like (e.g., foil, film), and may be porous. The positive electrode mixture layer may be formed on a pair of principal surfaces of the sheet-like positive electrode current collector, or may be formed on one principal surface. Alternatively, the positive electrode mixture layer may be formed in a packed state in a mesh-like positive electrode current collector.

As the material of the positive electrode current collector, for example, a metal material including Al, Ti, Fe, and the like can be used. The metal material may be Al, an Al alloy, Ti, a Ti alloy, an Fe alloy, and the like. The Fe alloy may be stainless steel.

The positive electrode mixture layer contains a positive electrode active material. The positive electrode mixture layer may contain, in addition to the positive electrode active material, at least one selected from the group consisting of a binder, a conductive material, and an additive. Between the positive electrode current collector and the positive electrode mixture layer, a conductive carbonaceous material may be disposed, as needed.

As the positive electrode active material, a material that electrochemically absorbs and releases lithium ions is used. Such a material may be at least one selected from the group consisting of a lithium-containing transition metal oxide, a transition metal fluoride, a polyanion, a fluorinated polyanion, and a transition metal sulfide. In view of its high average discharge voltage and cost advantage, the positive electrode active material may be a lithium-containing transition metal oxide.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one kind or two or more kinds of transition metal elements. The transition metal element may be at least one selected from the group consisting of Co, Ni, and Mn. The lithium-containing transition metal oxide can contain one kind or more kinds of typical metal elements, as needed. Examples of the typical metal element include Mg, Al, Ca, Zn, Ga, Ge, Sn, Sb, Pb, and Bi. The typical metal element may be Al or the like.

As the binder, for example, a fluorocarbon resin, a polyacrylonitrile, a polyimide resin, an acrylic resin, a polyolefin resin, and a rubbery polymer can be used. Examples of the fluorocarbon resin include polytetrafluoroethylene and polyvinylidene fluoride.

As the conductive material, for example, a conductive carbonaceous material can be used. Examples of the conductive carbonaceous material include carbon black, carbon nanotubes, and graphite. Examples of the carbon black include acetylene black and Ketjen black.

As the thickener, for example, a cellulose derivative, such as cellulose ether, can be used. Examples of the cellulose derivative include carboxymethyl cellulose (CMC) and a modified product thereof, and methyl cellulose. The modified product of CMC includes a salt of CMC. Examples of the salt include an alkali metal salt (e.g., sodium salt) and an ammonium salt.

As the conductive carbonaceous material disposed between the positive electrode current collector and the positive electrode mixture layer, for example, at least one selected from the conductive carbonaceous materials exemplified as the conductive material can be used.

The positive electrode can be obtained by, for example, applying or packing a slurry containing constituent components of the positive electrode mixture layer and a dispersion medium onto or into a positive electrode current collector, and drying and compressing the applied or packed film. A conductive carbonaceous material may be applied, as needed, onto a surface of the positive electrode current collector. As the dispersion medium, at least one selected from the group consisting of water and an organic medium (e.g., N-methyl-2-pyrrolidone) can be used.

(Separator)

For the separator, a porous sheet having ion permeability and electrically insulating properties is used. The porous sheet includes, for example, a microporous film, a woven fabric, and a non-woven fabric. The material of the separator may be a polymer material. The polymer material is exemplified by an olefin resin, a polyamide resin, and a cellulose. Examples of the olefin resin include polyethylene, polypropylene, and a copolymer of ethylene and propylene. The separator may contain an additive, as needed. Examples of the additive include an inorganic filler.

The separator may include multiple layers that differ in at least one of morphology and composition. Such a separator may be, for example, a laminate of a polyethylene microporous film and a polypropylene microporous film, or a laminate of a non-woven fabric containing cellulose fibers and a non-woven fabric containing thermoplastic resin fibers.

(Others)

The lithium secondary battery, for example, has a structure in which an electrode group formed by winding the positive electrode and the negative electrode with the separator interposed therebetween is housed in an outer body, together with the non-aqueous electrolyte. The wound-type electrode group may be replaced with a different form of electrode group, such as a stacked-type electrode group formed by stacking the positive electrode and the negative electrode with the separator interposed therebetween. The lithium secondary battery may be in any form, such as cylindrical type, prismatic type, coin type, button type, or laminate type.

FIG. 1 is a schematic longitudinal cross-sectional view of a lithium secondary battery according to one embodiment of the present disclosure.

A non-aqueous electrolyte secondary battery 10 is a cylindrical battery including a cylindrical battery case, a wound electrode group 14 housed in the battery case, and a non-aqueous electrolyte (not shown). The non-aqueous electrolyte includes a hydrofluoroether, lithium ions, and a non-aqueous solvent. The battery case is constituted of a case main body 15 which is a bottomed cylindrical metal container, and a sealing member 16 sealing the opening of the case main body 15. A gasket 27 is disposed between the case main body 15 and the sealing member 16, by which the airtightness of the battery case is ensured. In the case main body 15, insulating plates 17 and 18 are disposed respectively at both ends in the winding axis direction of the electrode group 14.

The case main body 15 has a step portion 21 formed by, for example, partially pressing the sidewall of the case main body 15 from outside. The step portion 21 may be annularly formed on the sidewall of the case main body 15 along the circumferential direction of the case main body 15. In this case, the sealing member 16 is supported by the surface of the step portion 21 on the opening side.

The sealing body 16 has a filter 22, a lower valve body 23, an insulating member 24, an upper valve body 25, and a cap 26. In the sealing member 16, these members are laminated together in this order. The sealing member 16 is attached at the opening of the case main body 15, such that the cap 26 is positioned outside the case main body 15, while the filter 22 is positioned inside the case main body 15. Each of the above members constituting the sealing member 16 is, for example, disk-shaped or ring-shaped. The members except the insulating member 24 are electrically connected to each other.

The electrode group 14 has a positive electrode 11, a negative electrode 12, and a separator 13. The positive electrode 11, the negative electrode 12, and the separator 13 all have a belt-like shape. The positive electrode 11 and the negative electrode 12 are spirally wound with the separator 13 interposed therebetween, such that the width directions of the belt-like positive and negative electrodes 11 and 12 are in parallel with the winding direction. In a cross section perpendicular to the winding axis of the electrode group 14, the positive electrode 11 and the negative electrode 12 are alternately stacked in the radial direction of the electrode group 14, with the separator 13 interposed between these electrodes. The negative electrode 12 includes a lithium alloy containing magnesium. In the lithium secondary battery 10, at the negative electrode, a lithium metal deposits during charge, and the lithium meal dissolves during discharge.

The positive electrode 11 is electrically connected, via a positive electrode lead 19, to a cap 26 also serving as a positive electrode terminal. One end of the positive electrode lead 19 is connected to the positive electrode 11, for example, approximately at its center of in the longitudinal direction. The positive electrode lead 19 extending from the positive electrode 11 passes through a through-hole (not shown) formed in the insulating plate 17 and extends to the filter 22. The other end of the positive electrode lead 19 is welded to the surface of the filter 22 on the electrode group 14 side.

The negative electrode 12 is electrically connected, via a negative electrode lead 20, to the case main body 15 also serving as a negative electrode terminal. One end of the negative electrode lead 20 is connected to, for example, an end portion of the negative electrode 12 in the longitudinal direction, and the other end is welded to the inner bottom surface of the case main body 15.

[Examples]

The present invention will be specifically described below with reference to Examples and Comparative Examples. It is to be noted, however, that the present invention is not limited to the following Examples.

<<Examples 1 to 7 and Comparative Examples 1 to 3>>

Cylindrical lithium secondary batteries were fabricated by the following procedure.

(1) Production of positive electrode

A positive electrode active material, acetylene black serving as a conductive material, and polyvinylidene fluoride serving as a binder were mixed in a mass ratio of 95:2.5:2.5. To the mixture, an appropriate amount of N-methyl-2-pyrrolidone serving as a dispersion medium was added and stirred, to prepare a positive electrode slurry. The positive electrode active material used here was a lithium-containing transition metal oxide containing Ni, Co and Al.

The positive electrode slurry was applied onto both surfaces of an aluminum foil serving as a positive electrode current collector, and dried. The dried product was compressed in its thickness direction using a roller. The resultant stack was cut in a predetermined electrode size, to form a positive electrode having a positive electrode mixture layer on both surfaces of the positive electrode current collector. Here, in a partial region of the positive electrode, a positive electrode current collector-exposed portion that does not have the positive electrode mixture layer was formed.

(2) Production of negative electrode

A negative electrode was produced by press-fitting, in an inert gas atmosphere, a magnesium-lithium alloy foil (thickness: 25 $\mu$m) onto a surface of a copper foil (thickness: 10 $\mu$m) serving as a negative electrode current collector. In Comparative Examples 2 and 3, a negative electrode was produced in the same manner as described above, except that a lithium foil (thickness: 25 $\mu$m) was used in place of the magnesium-lithium alloy foil. The content of magnesium contained in the magnesium-lithium alloy foil was adjusted so that the content (mass%) of magnesium in the lithium alloy in a fully discharged state determined by the already-described procedure was as shown in Table 1. The ratio obtained by subtracting the magnesium content in Table 1 from the mass of the lithium alloy or lithium metal is shown as a lithium content (mass%) in Table 1.

(3) Preparation of non-aqueous electrolyte

A liquid non-aqueous electrolyte was prepared by dissolving $LiPF_6$ and $LiBF_2(C_2O_4)$, in a non-aqueous solvent having a composition as shown in Table 1. The concentrations of $LiPF_6$ and $LiBF_2(C_2O_4)$ in the non-aqueous electrolyte were 1 mol/L and 0.1 mol/L, respectively. In Examples 5 to 7, in preparing a non-aqueous electrolyte, a fluorinated alcohol shown in Table 1 was added so that its mass-based content in the non-aqueous electrolyte at the time of preparation was as shown in Table 1.

(4) Fabrication of battery

To the positive electrode current collector, a positive electrode lead made of aluminum was attached at its end, by means of welding. To the negative electrode current collector, a negative electrode lead made of nickel was attached at its end, by means of welding. In an inert gas atmosphere, the negative electrode current collector and the positive electrode were spirally wound with a polyethylene separator (microporous film) interposed therebetween, to form an electrode group.

The electrode group was housed in a pouch-like outer body formed of a laminate sheet having an Al layer, and after injecting a non-aqueous electrolyte thereinto, the outer body was sealed, to complete a lithium secondary battery. When housing the electrode group in the outer body, the other end of the positive electrode lead and the other end of the negative electrode lead were exposed externally from the outer body.

(5) Evaluation

The following evaluation was performed using the fabricated lithium secondary batteries.

(a) Cycle characteristics

In a 25°C constant temperature bath, the lithium secondary batteries were each charged under the following charging conditions, and after a rest for 20 minutes, discharged under the following discharging conditions. With these charge, rest, and discharge taken as one cycle, a charge-discharge test of 10 cycles was performed. The ratio of the discharge capacity at the 10th cycle to the discharge capacity at the 1st cycle was determined as a capacity retention rate. The cycle characteristics of each lithium secondary battery were evaluated by a relative ratio (%), with the capacity retention rate of the lithium secondary battery of Comparative Example 3 taken as 100.

(Charge)

A constant-current charge was performed at a current of 10 mA per unit area of the electrode (unit: square centimeter) until the battery voltage reached 4.3 V, and then, a constant voltage-charge was performed at a voltage of 4.3 V until the current value per unit area of the electrode (unit: square centimeter) reached 1 mA.

(Discharge)

A constant-current discharge was performed at a current of 10 mA per unit area (unit: square centimeter) of the electrode until the battery voltage reached 2.5 V

The evaluation results are shown in Table 1. E1 to E7 correspond to Examples 1 to 7, and C1 to C3 correspond to Comparative Examples 1 to 3.

[Table 1]

| | | Negative electrode | | Non-aqueous electrolyte | | | | | | | Cycle characteristics |
| | | | | Non-aqueous solvent | | | Fluorinated alcohol | | | | |
| | | | | HFE | | DME | | | | | |
| | | Li | Mg | (a1) | (a2) | | (b1) | (b2) | (b3) | | |
| | | mass% | mass% | vol% | vol% | vol% | ppm | ppm | ppm | | % |
| | E1 | 99 | 1 | 70 | | 30 | | | | | 108 |
| | E2 | 95 | 5 | 70 | | 30 | | | | | 110 |
| | E3 | 95 | 5 | | 70 | 30 | | | | | 109 |
| | E4 | 95 | 5 | 50 | | 50 | | | | | 110 |
| | E5 | 95 | 5 | 50 | | 50 | 200 | | | | 114 |
| | E6 | 95 | 5 | 50 | | 50 | | 200 | | | 116 |

(continued)

| | Negative electrode | | Non-aqueous electrolyte | | | | | | Cycle characteristics |
| | | | Non-aqueous solvent | | | Fluorinated alcohol | | | |
| | | | HFE | | DME | | | | |
| | Li | Mg | (a1) | (a2) | | (b1) | (b2) | (b3) | |
| | mass% | mass% | vol% | vol% | vol% | ppm | ppm | ppm | % |
| E7 | 95 | 5 | 50 | | 50 | | | 200 | 115 |
| C1 | 95 | 5 | | | 100 | | | | 102 |
| C2 | 100 | | 50 | | 50 | | | | 101 |
| C3 | 100 | | | | 100 | | | | 100 |

HFE: hydrofluoroether
DME: 1,2-dimethoxyethane
(a1): 1,1,2,2-tetrafluoroethyl-2,2,2-trifluoroethyl ether
(a2): 1,1,2,2-tetrafluoroethyl-2,2,3,3-tetrafluoropropyl ether
(b1): 2,2,2-trifluoroethyl ether
(b2): 2,2,3,3,3-pentafluoro-1-propanol
(b3): 2,2,3,3-tetrafluoro-1-propanol

Table 1 shows that the improvement in cycle characteristics achieved by including a lithium alloy containing magnesium in the negative electrode was 2% (comparison between C1 and C3). Furthermore, when using a negative electrode including a lithium metal, the improvement in cycle characteristics achieved by using a non-aqueous electrolyte containing a hydrofluoroether was 1% (comparison between C2 and C3). It can be estimated from these results that, when a negative electrode including a lithium alloy containing magnesium is combined with a non-aqueous electrolyte containing a hydrofluoroether, the cycle characteristics will be about 103% at most. However, actually, the cycle characteristics achieved by combining a negative electrode including a lithium alloy containing magnesium with a non-aqueous electrolyte containing a hydrofluoroether was 110% (comparison between E4 and C1 to C3), which was higher than the estimated value of 103%. As shown above, by combining a negative electrode including a lithium alloy containing magnesium with a non-aqueous electrolyte containing a hydrofluoroether, a synergistic effect of improving the cycle characteristics can be obtained.

When the content of magnesium in the lithium alloy is relatively as low as 1 mass%, despite a high content of the hydrofluoroether in the non-aqueous solvent, excellent cycle characteristics comparable to E4 can be obtained (E1 to E3). When the non-aqueous electrolyte further contains a fluorinated alcohol, the cycle characteristics can be further improved (E5 to E7).

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Industrial Applicability]

The lithium secondary battery according to the present disclosure is applicable to various uses for which excellent cycle characteristics are required. Such uses include various electronic devices (e.g., mobile phones, smartphones, tablet terminals, wearable terminals), electric cars including hybrids and plug-in hybrids, and household storage batteries combined with solar cells. The uses of the lithium secondary battery, however, are not limited thereto.

[Reference Signs List]

10      lithium secondary battery
11      positive electrode

| 12 | negative electrode |
| 13 | separator |
| 14 | electrode group |
| 15 | case main body |
| 16 | sealing member |
| 17, 18 | insulating plate |
| 19 | positive electrode lead |
| 20 | negative electrode lead |
| 21 | step portion |
| 22 | filter |
| 23 | lower valve body |
| 24 | insulating member |
| 25 | upper valve body |
| 26 | cap |
| 27 | gasket |
| 30 | positive electrode current collector |
| 31 | positive electrode mixture layer |

**Claims**

1. A lithium secondary battery, comprising:

   a positive electrode; a negative electrode; a separator disposed between the positive electrode and the negative electrode; and a non-aqueous electrolyte, wherein
   the negative electrode, at least in a charged state, includes a lithium alloy containing magnesium,
   at the negative electrode, a lithium metal deposits during charge, and the lithium metal dissolves during discharge, and
   the non-aqueous electrolyte contains a hydrofluoroether and lithium ions.

2. The lithium secondary battery according to claim 1, wherein the hydrofluoroether includes a compound represented by $R^1$-O-$R^2$, where $R^1$ is a fluoroalkyl group, $R^2$ is an alkyl group or a fluoroalkyl group, at least one of $R^1$ and $R^2$ has at least one hydrogen atom, and a total number n of carbon atoms in $R^1$ and $R^2$ is 10 or less.

3. The lithium secondary battery of claim 2, wherein $R^1$ and $R^2$ each independently have at least one hydrogen atom.

4. The lithium secondary battery according to claim 2 or 3, wherein a fluorination rate of the hydrofluoroether is 60% or more.

5. The lithium secondary battery according to any one of claims 1 to 4, wherein the hydrofluoroether includes at least one selected from the group consisting of 1,1,2,2-tetrafluoroethyl-2,2,2-trifluoroethyl ether, and 1,1,2,2-tetrafluoroethyl-2,2,3,3-tetrafluoropropyl ether.

6. The lithium secondary battery according to any one of claims 1 to 5, further including a fluorinated alcohol represented by R-OH, where R is a fluoroalkyl group.

7. The lithium secondary battery according to claim 6, wherein the fluorinated alcohol includes at least one selected from the group consisting of 2,2,2-trifluoroethanol, 2,2,3,3,3-pentafluoro-1-propanol, and 2,2,3,3-tetrafluoro-1-propanol.

8. The lithium secondary battery according to any one of claims 1 to 7, wherein a content of magnesium in the lithium alloy is 0.1 mass% or more and 30 mass% or less.

# FIG. 1

### INTERNATIONAL SEARCH REPORT

| International application No. |
|---|
| **PCT/JP2021/046734** |

**A. CLASSIFICATION OF SUBJECT MATTER**

*H01M 4/40*(2006.01)i; *H01M 10/052*(2010.01)i; *H01M 10/0567*(2010.01)i; *H01M 10/0569*(2010.01)i
FI:   H01M10/0569; H01M4/40; H01M10/052; H01M10/0567

According to International Patent Classification (IPC) or to both national classification and IPC

**B. FIELDS SEARCHED**

Minimum documentation searched (classification system followed by classification symbols)

H01M4/40; H01M10/052; H01M10/0567; H01M10/0569

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| Y | WO 2011/136226 A1 (ASAHI GLASS CO., LTD.) 03 November 2011 (2011-11-03)<br>paragraph [0035], claims | 1-8 |
| Y | WO 2016/152425 A1 (NEC CORP.) 29 September 2016 (2016-09-29)<br>claims | 1, 6-8 |
| Y | SHI, Zhong et al. Electrochemical properties of Li-Mg alloy electrodes for lithium batteries.<br>Journal of Power Sources, January 2001, vol. 92, pp. 70-80, in particular, pp. 71, 72<br>pp. 70-80 | 1-8 |
| Y | KR 10-2014-0038676 A (LG CHEMICAL LTD.) 31 March 2014 (2014-03-31)<br>claims, paragraph [0014] | 6–8 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/046734**

| Patent document cited in search report | | | Publication date (day/month/year) | Patent family member(s) | | | Publication date (day/month/year) |
|---|---|---|---|---|---|---|---|
| WO | 2011/136226 | A1 | 03 November 2011 | (Family: none) | | | |
| WO | 2016/152425 | A1 | 29 September 2016 | US claims | 2018/0115020 | A1 | |
| KR | 10-2014-0038676 | A | 31 March 2014 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6119868849 A
- JP 2019216094 A